# EUROPÄISCHE PATENTSCHRIFT

(11) **EP 1 373 356 B1**
(45) Veröffentlichungstag und Bekanntmachung des Hinweises auf die Patenterteilung: **04.05.2005**
(21) Anmeldenummer: 02722144.9
(22) Anmeldetag: 27.02.2002
(51) Int. Cl.: C08G 61/12, H01B 1/12

(54) **NEUE POLYTHIOPHEN-DISPERSIONEN**
NOVEL POLYTHIOPHENE DISPERSIONS
NOUVELLES DISPERSIONS DE POLYTHIOPHENE

(30) Priorität: 12.03.2001 DE 10111790
(43) Veröffentlichungstag der Anmeldung: 02.01.2004
(73) Patentinhaber: Bayer Aktiengesellschaft, 51368 Leverkusen (DE)
(72) Erfinder: JONAS, Friedrich, 52066 Aachen (DE); KIRCHMEYER, Stephan, 51375 Leverkusen (DE)
(86) Internationale Anmeldenummer: PCT/EP2002/002066
(87) Internationale Veröffentlichungsnummer: WO 2002/072660

(56) Entgegenhaltungen:
- EP-A- 0 340 512
- EP-A- 0 440 957
- EP-A- 1 081 548
- WO-A-02/00759
- WO-A-02/42352
- WO-A-98/01909

## Beschreibung

Die Erfindung betrifft die Herstellung und Verwendung von Dispersionen oder Lösungen, enthaltend gegebenenfalls substituierte Polythiophene in wasserfreien oder wasserarmen organischen Lösungsmitteln.

Leitfähige Polymere auf der Basis von substituierten Thiophenen finden in der Technik zunehmend Verwendung beispielsweise bei der Durchkontaktierung von Leiterplatten (EP-A 553671), der Antistatikausrüstung fotographischer Filme und Kunststoff-Formteilen (EP-A 440957) oder für Elektroden in Feststoffelektrolyt-Kondensatoren (EP-A 340512). Für derartige Verwendungen werden dabei bevorzugt Dispersionen solcher π-konjugierten, polymeren Verbindungen eingesetzt.

Wässrige Dispersionen oder Lösungen von Ionenkomplexen Polythiophen⁺An⁻ haben sich für solche Zwecke als besonders geeignet erwiesen, weil sie sowohl eine hohe Stabilität besitzen als auch zu Beschichtungen mit einer ausgezeichneten Leitfähigkeit führen.

Diese Ionenkomplexe Polythiophen⁺An⁻ können bestehen aus π-konjugierten Polythiophenen, deren positive Ladungen über das gesamte Molekül delokalisiert sind und Anionen von zum Beispiel organischen Polysäuren, die diese positiven Ladungen ausgleichen.

Bei der oxidativen Polymerisation von substituierten 3,4-Alkylendioxy-thiophenen mit Kaliumperoxodisulfat als Oxidationsmittel in Gegenwart von Polystyrolsulfonsäure fallen gemäß EP-A 440957 Ionenkomplexe Polythiophen⁺An⁻ als wässrige Dispersionen an, die aus 3,4-Poly-alkylendioxy-thiophenen und Anionen der Polystyrolsulfonsäure bestehen. Diese Dispersionen können direkt für oben genannte Zwecke eingesetzt werden.

Auch bei der oxidativen Polymerisation von substituierten 3,4-Alkylendioxy-thiophenen, die in der Alkyleneinheit durch Säuregruppen tragende Reste substituiert sind, entstehen Dispersionen oder Lösungen von Ionenkomplexen Polythiophen⁺An⁻, in denen jedoch die positiven Ladungen des konjugierten π-Systems durch die ebenfalls im Molekül selbst vorhandenen Säureanionen ausgeglichen werden.

Eine verbesserte Variante für die Herstellung solcher wässrigen Dispersionen oder Lösungen stellt der Einsatz von Ionenaustauschern zur Entfernung des anorganischen Salzgehalts oder eines Teils davon, der überwiegend aus der chemischen Oxidation stammt, dar (DE-A 19 627 071). Durch diesen Entsalzungsschritt wird die Bildung von Trübungen und Inhomogenitäten beispielsweise bei der Herstellung von dünnen Antistatikschichten vermieden und es entstehen hochtransparente, klare Schichten.

Es hat sich jedoch herausgestellt, dass trotz der guten Eigenschaften wässriger Dispersionen oder Lösungen für einige Anwendungen die im Vergleich zu Wasser unterschiedliche Benetzungsfähigkeit und das differenzierte Trocknungsverhalten organischer Lösungsmittel von Vorteil beispielsweise für das Aufbringen leitfähiger Schichten auf das Trägermaterial ist.

Die einfache Trocknung oder destillative Entfernung des Wassers aus oben genannten Dispersionen oder Lösungen führt zu Pulvern, die durch Zusatz organischer Lösungsmittel nicht auf einfache Weise redispergiert werden können.

Aus EP-A 203 438 sind in organischen Lösungsmitteln dispergierte, Polymere aus substituierten Thiophenen bekannt. Der Nachteil des dort beschriebenen Verfahrens ist jedoch die Herstellung der Polythiophene aus substituierten 2,5-Dihalogenthiophenen mit Hilfe von Magnesium in Gegenwart eines Nickelkatalysators. Eine solche Reaktionsführung ist in größerem Maßstab nicht praktikabel und der Gehalt an krebserzeugendem und allergenem Nickel verbietet die Verwendung der Lösung ohne vorherige aufwändige Aufarbeitungsschritte.

Auch in EP-A 253 994 ist eine Herstellungsmethode für Lösungen oder Dispersionen von Ionenkomplexen Polythiophen⁺An⁻, bestehend aus Polythiophenen und Anionen der dort verwendeten Leitsalze, in organischen Lösungsmitteln beschrieben. In diesen Fällen findet die Polymerisation der monomeren Thiophene durch chemische Oxidation bereits im organischen Lösungsmittel statt. Bei diesem Verfahren fällt das gewünschte Produkt jedoch aus der Reaktionslösung aus und ist daher beispielsweise für die Herstellung transparenter Filme nicht mehr verwendbar.

3,4-Poly-alkylendioxy-thiophene enthaltende Dispersionen können gemäß EP-A 440 957 ebenfalls direkt in organischen Lösungsmitteln hergestellt werden, allerdings verbleibt in solchen Fällen der anorganische Salzgehalt, der überwiegend aus der chemischen Oxidation stammt, in Lösung, was zu oben genannten unerwünschten Effekten bei der Herstellung von Beschichtungen führen kann.

Es bestand daher das Bedürfnis einen Weg zu finden, die hervorragenden Leitfähigkeits- und Beschichtungseigenschaften der ganz oder teilweise entsalzten, wässrigen Dispersionen oder Lösungen der Ionenkomplexe Polythiophen⁺An⁻ mit den vielfältig variablen Benetzungs- und Trocknungseigenschaften organischer Lösungsmittel zu verknüpfen.

Es wurde nun ein Verfahren zur Herstellung von Dispersionen oder Lösungen, enthaltend gegebenenfalls substituierte Polythiophene in organischen Lösungsmitteln gefunden, das dadurch gekennzeichnet ist, dass
1) ein mit Wasser mischbares, organisches Lösungsmittel oder ein mit Wasser mischbares Lösungsmittelgemisch einer wässrigen Dispersion oder Lösung enthaltend gegebenenfalls substituierte Polythiophene zugegeben und
2) das Wasser wenigstens zum Teil aus den resultierenden Mischungen entfernt und
3) gegebenenfalls mit organischen Lösungsmitteln verdünnt wird.

Für Schritt 1) sind dabei Dispersionen oder Lösungen, enthaltend Ionenkomplexe Polythiophen⁺An⁻ bevorzugt, wobei Polythiophen⁺ für Polymere steht, welche wenigstens zum Teil positiv geladene wiederkehrende Einheiten der Formel (I) enthalten, 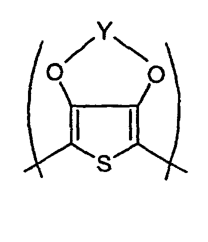 in der
- Y: -(CH₂)ₘ-CR¹R²(CH₂)ₙ- oder einen gegebenenfalls substituierten 1,2-C₃-C₈-Cycloalkylenrest bedeutet und
- R¹ und R²: unabhängig voneinander für Wasserstoff, Hydroxymethyl, einen gegebenenfalls substituierten C₁-C₂₀-Alkylrest oder einen gegebenenfalls substituierten C₆-C₁₄-Arylrest stehen,
und
- m, n: gleich oder verschieden eine ganze Zahl von 0 bis 3 sind
und wobei
- An⁻: für ein Anion einer organischen Polysäure steht,
oder wobei
Polythiophen⁺An⁻ für Polymere steht, die wiederkehrende Einheiten der Formel (II) enthalten, 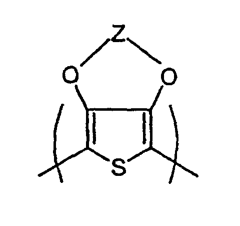 in der wenigstens teilweise die Thiophenringe eine positive Ladung tragen und
in der
- Z: -(CH₂)ₘ-CR³R⁴(CH₂)ₙ-,
- R³: Wasserstoff oder-(CH₂)ₛ-O-(CH₂)ₚ-SO₃⁻M⁺
- R⁴: -(CH₂)ₛ-O-(CH₂)ₚ-SO₃⁻M⁺
- M⁺: ein Kation
- s: eine ganze Zahl von 0 bis 10
- p: eine ganze Zahl von 1 bis 18 bedeuten.

Die Polythiophene der Formeln (I) und (II) liegen in polykationischer Form vor. Die positiven Ladungen sind über das gesamte Molekül delokalisiert und sind deshalb in den Formeln nicht wiedergegeben.

M⁺ kann in Formel (II) nicht nur beispielsweise für Metallionen, Protonen und gegebenenfalls substituierte Ammoniumionen stehen, sondern bevorzugt beispielsweise auch für eine kationische Einheit des Polythiophens. Ebenfalls bevorzugt sind Alkalimetallionen und Ammoniumionen sowie Protonen.

Für Schritt 1) sind dabei Dispersionen oder Lösungen von Ionenkomplexen Polythiophen⁺An⁻ besonders bevorzugt, wobei Polythiophen⁺ für Polymere steht, welche wenigstens zum Teil positiv geladene wiederkehrende Einheiten der Formel (I) enthalten, in der
- Y: für -(CH₂)ₘ-CR¹R²(CH₂)ₙ- oder einen 1,2-Cyclohexylen-Rest steht
- R¹ und R²: unabhängig voneinander Wasserstoff, Hydroxymethyl, C₁-C₈-Alkyl, Phenyl,
- m, n: gleich oder verschieden 0 oder 1 bedeutet,
und wobei
- An⁻: für Anionen von Polyacrylsäuren, Polyvinylsulfonsäuren, Polystyrolsulfonsäuren, Mischungen davon oder Copolymerisaten der zugrundeliegenden Monomeren oder Copolymerisaten mit säurefreien Monomeren steht,
oder wobei Polythiophen⁺An⁻ für Polymere steht, die wiederkehrende Einheiten der Formel (II) enthalten, in der die Thiophenringe wenigstens zum Teil eine positive Ladung tragen und in der
- Z: -(CH₂)ₘ-CR¹R²(CH₂)ₙ-,
- R³: Wasserstoff
- R⁴: -(CH₂)ₛ-O-(CH₂)ₚ-SO₃⁻M⁺
- m, n: gleich oder verschieden eine ganze Zahl von 0 bis 3
- M⁺: ein Kation
- s: 0, 1 oder 2
- p: 4 oder 5 bedeuten.

Ganz besonders bevorzugt sind Dispersionen oder Lösungen von Ionenkomplexen Polythiophen⁺An⁻, wobei Polythiophen⁺ für Polymere steht, welche wenigstens zum Teil positiv geladene, wiederkehrende Einheiten der Formel (I) enthalten, in der
- Y: für einen 1,2-Ethylen-Rest,
und wobei
- An⁻: für Anionen von Polystyrolsulfonsäuren stehen,
oder in denen Polythiophen⁺An⁻ für Polymere steht, die wiederkehrende Einheiten der Formel (II) enthalten, in der die Thiophenringe wenigstens zum Teil eine positive Ladung tragen und in der
- Z: -(CH₂)ₘ-CR³R⁴(CH₂)ₙ-,
- R³: Wasserstoff
- R⁴: -(CH₂)ₛ-O-(CH₂)ₚ-SO₃⁻M⁺
- m: 0 oder 1
- n: 0 oder 1
- M⁺: ein Kation
- s: 0 oder 1 und
- P: 4
bedeuten.

In diesem ersten Schritt kann die zugesetzte Menge des wassermischbaren Lösungsmittels oder des wassermischbaren organischen Lösungsmittelgemisches zum Beispiel zwischen 5 und 1000 Gew.-% bezogen auf die eingesetzte wässrige Dispersion oder Lösungen des Ionenkomplexes betragen.

Geeignete Lösungsmittel sind dabei beispielsweise und ohne Anspruch auf Vollständigkeit:
Amidische Lösungsmittel wie beispielsweise Formamid, N-Methylacetamid, N,N-Dimethylacetamid, N-Methylpyrrolidon, N-Methylcaprolactam, N-Methylformamid.

Alkohole und Ether wie zum Beispiel Ethylenglycol, Glycerin, Ethylenglycoldimethylether, Ethylenglycolmonomethylether, Ethylenglycolmonobutylether oder Dioxan.

Wasserlösliche Lösungsmittelgemische, die aus für sich allein wassermischbaren Lösungsmitteln und für sich allein nicht wassermischbaren Lösungsmitteln bestehen, sind ebenfalls umfasst.

Die Lösungsmittel können einzeln oder als Gemisch oder einzeln oder als Gemisch zusammen mit Zuckeralkoholen wie zum Beispiel Sorbit oder Mannit zugesetzt werden.

Bevorzugt sind amidische Lösungsmittel und Lösungsmittel, die einen Siedepunkt von über 100°C bei Normaldruck besitzen und wassermischbare Lösungsmittel oder wassermischbare Lösungsmittelgemische, die mit Wasser ein Azeotrop bilden.

Schritt 2) kann beispielsweise durch Membranverfahren wie zum Beispiel die Ultrafiltration oder durch Destillation erfolgen. Die Destillation ist hierbei bevorzugt und kann zum Beispiel bei einer Temperatur von 0 bis 200°C, bevorzugt bei 20 bis 100°C durchgeführt werden. Als Druck für die Destillation kann Normaldruck oder verminderter Druck gewählt werden. Verminderter Druck bis hinab zu 0,001 mbar ist dabei bevorzugt.

Gegebenenfalls kann Schritt 3) durchgeführt werden. Die zur Verdünnung eingesetzten Lösungsmittel können die in Schritt 1) beschriebenen Lösungsmittel oder Lösungsmittelgemische sein.

Darüber hinaus sind beispielsweise geeignet:

Aliphatische Alkohole wie zum Beispiel Methanol, Ethanol, n-Propanol, iso-Propanol, n-Butanol, iso-Butanol, tert.-Butanol, Amylalkohol, iso-Amylalkohol, Neopentylalkohol,
aliphatische Ketone wie beispielsweise Aceton, Methylethylketon, Methylisobutylketon, Methyl-tert.-butylketon,
Ether wie zum Beispiel Tetrahydrofuran, Methyl-tert.-butylether,
Ester aliphatischer und aromatischer Carbonsäuren wie zum Beispiel Essigsäureethylester, Essigsäurebutylester, Glycolmonomethyletheracetat, Phtalsäurebutylester,
aliphatische und aromatische Kohlenwasserstoffe wie Pentan, Hexan, Cyclohexan, Octan, iso-Octan, Decan, Toluol, o-Xylol, m-Xylol, p-Xylol.

Die Lösungsmittel können allein oder als Gemisch zur Verdünnung eingesetzt werden.

Auf erfindungsgemäße Weise werden Dispersionen von Ionenkomplexen erhalten, die einen Wassergehalt von 0 bis 20 Gew.-%, bevorzugt zwischen 0 und 5 Gew.-% aufweisen.

Der Gehalt der Ionenkomplexe in den Dispersionen kann zwischen 0,01 und 20 Gew.-%, bevorzugt zwischen 0,2 und 5 Gew.-% betragen.

Die erfindungsgemäß hergestellten Dispersionen von Ionenkomplexen können zum Beispiel verwendet werden für die Herstellung von wiederaufladbaren Batterien, lichtemittierenden Dioden, Sensoren, elektrochromen Scheiben, Beschichtungen von Kopiertrommeln, Kathodenstrahlröhren, elektrisch leitfähigen und antistatischen Beschichtungen auf Kunststoff-Folien und Kunststoff-Formteilen oder auf fotographischen Materialien.

Weiterhin können die erfindungsgemäßen Dispersionen oder Lösungen zur Datenspeicherung, optischen Signalumwandlung, Unterdrückung elektromagnetischer Störungen (EMI) und Sonnenenergieumwandlung verwendet werden.

Darüberhinaus beispielsweise für die Herstellung von Feststoffelektrolyten in Feststoffkondensatoren, von Elektrolumineszenzanzeigen und von transparenten Elektroden zum Beispiel in Touch Screens.

Die Herstellung von Beschichtungen kann nach bekannten Verfahren wie beispielsweise Sprühen, Tiefdruck, Offsetdruck, Vorhanggießen, Aufschleudem (spincoating), Auftrag über Antragwalzen, Streichen und Tauchen erfolgen.

Den erfindungsgemäß hergestellten Dispersionen können gegebenenfalls weiterhin Bindemittel und/oder Vemetzer wie zum Beispiel Polyurethane oder deren Dispersionen, Polyacrylate, Polyolefindispersionen und Epoxisilane, wie beispielsweise 3-Glycidoxypropyl-trialkoxysilane, zugesetzt werden.

Zur Erhöhung der Kratzfestigkeit von Beschichtungen können den erfindungsgemäßen Dispersionen darüber hinaus Silanhydrolysate zum Beispiel auf der Basis von Tetraethoxysilan zugesetzt werden (siehe u.a. EP-A 825 219).

### Beispiele

### Beispiel 1

### Herstellung einer wässrigen Suspension eines Ionenkomplexes Polythiopen⁺An⁻

20 g freie Polystyrolsulfonsäure (Mn ca. 40 000), 21,4 g Kaliumperoxodisulfat und 50 mg Eisen(III)-sulfat wurden unter Rühren in 2 000 ml Wasser vorgelegt. Unter Rühren wurden 8,0 g 3,4-Ethylendioxythiophen zugegeben. Die Lösung wurde 24 h bei Raumtemperatur gerührt. Anschließend wurden 100 g Anionenaustauscher (Handelsprodukt Bayer AG Lewatit MP 62) und 100 g Kationenaustauscher (Handelsprodukt Bayer AG Lewatit S 100), beide wasserfeucht, zugegeben und 8 Stunden gerührt.

Die Ionenaustauscher wurden durch Filtration entfernt. Es wurde eine gebrauchsfertige Lösung mit einem Feststoffgehalt von ca. 1,2 Gew.-% erhalten.

### Beispiel 2

In einem 500 ml Dreihalskolben mit Rührer und Innenthermometer wurden 100 g der nach Beispiel 1 hergestellten Lösung vorgelegt. Unter Rühren wurden in 15 Minuten 200 g Dimethylacetamid zugegeben und anschließend bei 40°C und 18 mbar Druck 122 g eines Gemisches von Wasser und Dimethylacetamid abdestilliert.

Die Lösung hatte einen Wassergehalt von 3,9 % (bestimmt nach Karl Fischer) und einen Feststoffgehalt von 0,8 % (bestimmt durch 12-stündige Trocknung bei 140°C).

Zur Herstellung von Beschichtungen wurden je 10 g der Lösung mit den in der Tabelle angegebenen Mengen Ethanol verdünnt. Anschließend wurden die Lösungen mit einem Spiralrakel in einer Nassfilmdicke von 24 µm auf Polyesterfolien aufgerakelt und 15 Minuten bei 60°C getrocknet und die Oberflächenwiderstände bestimmt.

Die gemessenen Werte sind in der Tabelle zusammengefasst. In allen Fällen wurden leitfähige, transparente, klare Beschichtungen erhalten.

| Versuch-Nr. | Ethanol [g] | Oberflächenwiderstand [Ω/□] |
|---|---|---|
| 1 | 5 | 4200 |
| 2 | 10 | 68*10³ |
| 3 | 50 | 895*10³ |
| 4 | 100 | 3,6*10⁷ |

### Beispiel 3

In einem 500 ml Dreihalskolben mit Rührer und Innenthermometer wurden 70 g der nach Beispiel 1 hergestellten Lösung vorgelegt. Unter Rühren wurden in 10 Minuten 130 g N-Methylpyrrolidon zugegeben und anschließend bei 20°C und 8 mbar Druck 67 g eines Gemisches von Wasser und N-Methylpyrrolidon abdestilliert.

Zur Herstellung von Beschichtungen wurde die Lösung mit einem Spiralrakel in einer Nassfilmdicke von 24 µm auf Polyesterfolien aufgerakelt und 12 h bei 40 bzw. 100°C getrocknet und die Oberflächenwiderstände bestimmt. Die gemessenen Werte sind in der Tabelle zusammengefasst. In beiden Fällen wurden leitfähige, transparente, klare Beschichtungen erhalten.

| Versuch-Nr. | Trockentemperatur [°C] | Oberflächenwiderstand [Ω/□] |
|---|---|---|
| 1 | 40 | 1,8*10³ |
| 2 | 100 | 7,8*10³ |

## Patentansprüche

1. Verfahren zur Herstellung von Dispersionen oder Lösungen, enthaltend Ionenkomplexe Polythiophen⁺An⁻, in organischen Lösungsmitteln, **dadurch gekennzeichnet, dass**
a) ein mit Wasser mischbares organisches Lösungsmittel oder ein mit Wasser mischbares organisches Lösungsmittelgemisch einer wässrigen Dispersion oder Lösung von Ionenkomplexen Polythiophen⁺An⁻ zugegeben wird, wobei Polythiophen⁺ für Polymere steht, welche wenigstens zum Teil positiv geladene wiederkehrende Einheiten der Formel (I) enthalten, 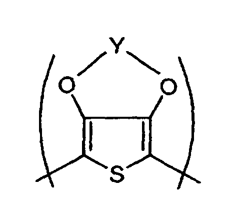 in der
Y -(CH₂)ₘ-CR¹R²(CH₂)ₙ- oder einen gegebenenfalls substituierten 1,2-C₃-C₈-Cycloalkylenrest bedeutet und
R¹ und R² unabhängig voneinander für Wasserstoff, Hydroxymethyl, einen gegebenenfalls substituierten C₁-C₂₀-Alkylrest oder einen gegebenenfalls substituierten C₆-C₁₄-Arylrest stehen,
und
m, n gleich oder verschieden eine ganze Zahl von 0 bis 3 sind
und wobei
An⁻ für ein Anion einer organischen Polysäure steht,
oder wobei
Polythiophen⁺An⁻ für Polymere steht, die wiederkehrende Einheiten der Formel (II) enthalten, in der die Thiophenringe wenigstens zum Teil eine positive Ladung tragen 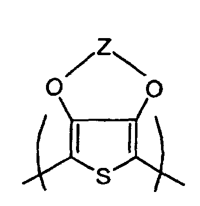 und in der
Z -(CH₂)ₘ-CR³R⁴(CH₂)ₙ-,
R³ Wasserstoff oder -(CH₂)ₛ-O-(CH₂)ₚ-SO₃⁻M⁺
R⁴ -(CH₂)ₛ-O-(CH₂)ₚ-SO₃⁻M⁺
m, n eine ganze Zahl von 0 bis 3
M⁺ ein Kation
s eine ganze Zahl von 0 bis 10
p eine ganze Zahl von 1 bis 18 bedeuten
und
b) Wasser aus den resultierenden Mischungen entfernt wird.

2. Verfahren nach Anspruch 1, **dadurch gekennzeichnet, dass** die erhaltene Dispersion oder Lösung anschließend an Schritt b) mit einem organischen Lösungsmittel oder einem Gemisch aus organischen Lösungsmitteln verdünnt wird.

3. Verfahren nach den Ansprüchen 1 oder 2, **dadurch gekennzeichnet, dass** die für Schritt a) eingesetzten, wässrigen Dispersionen oder Lösungen Ionenkomplexe Polythiophen⁺An⁻ enthalten, wobei Polythiophen⁺ für Polymere steht, die wenigstens zum Teil positiv geladene, wiederkehrende Einheiten der Formel (I) enthalten, in der
Y für -(CH₂)ₘ-CR¹R²(CH₂)ₙ- oder einen 1,2-Cyclohexylen-Rest und
R¹ und R² unabhängig voneinander für Wasserstoff, Hydroxymethyl, C₁-C₈-Alkyl, Phenyl stehen und,
m, n gleich oder verschieden für 0 oder 1 stehen
und wobei
An⁻ für Anionen von Polyacrylsäuren, Polyvinylsulfonsäuren, Polystyrolsulfonsäuren, Mischungen davon oder Copolymerisaten der zugrundeliegenden Monomeren oder Copolymerisaten mit säurefreien Monomeren steht.

4. Verfahren nach den Ansprüchen 1 oder 2, **dadurch gekennzeichnet, dass** die für Schritt a) eingesetzten, wässrigen Dispersionen oder Lösungen Ionenkomplexe Polythiophen⁺An⁻ enthalten, wobei Polythiophen⁺An⁻ für Polymere steht, die wiederkehrende Einheiten der Formel (II) enthalten, in der die Thiophenringe wenigstens zum Teil eine positive Ladung tragen und in der
Z -(CH₂)ₘ-CR¹R²(CH₂)ₙ-,
R³ Wasserstoff
R⁴ -(CH₂)ₛ-O-(CH₂)ₚ-SO₃⁻M⁺
m, n eine ganze Zahl von 0 bis 3
M⁺ ein Kation
s 0, 1 oder 2
p 4 oder 5 bedeuten.

5. Verfahren nach den Ansprüchen 1 oder 2, **dadurch gekennzeichnet, dass** die für Schritt a) eingesetzten, wässrigen Dispersionen oder Lösungen Ionenkomplexe Polythiophen⁺An⁻ enthalten, wobei Polythiophen⁺ für Polymere steht, die wenigstens zum Teil positiv geladene, wiederkehrende Einheiten der Formel (I) enthalten,
in der
Y für einen 1,2-Ethylen-Rest steht,
und wobei
An⁻ für Anionen von Polystyrolsulfonsäuren steht.

6. Verfahren nach den Ansprüchen 1 oder 2, **dadurch gekennzeichnet, dass** die für Schritt a) eingesetzten, wässrigen Dispersionen oder Lösungen Ionenkomplexe Polythiophen⁺An⁻ enthalten, wobei Polythiophen⁺An⁻ für Polymere steht, die wiederkehrende Einheiten der Formel (II) enthalten, in der die Thiophenringe wenigstens zum Teil eine positive Ladung tragen und in der
Z -(CH₂)ₘ-CR³R⁴(CH₂)ₙ-,
R³ Wasserstoff
R⁴ -(CH₂)ₛ-O-(CH₂)ₚ-SO₃⁻M⁺
m 1
n 0 oder 1
M⁺ ein Kation
s 0 oder 1
p 4 bedeuten.

7. Verfahren nach den Ansprüchen 1 bis 6, **dadurch gekennzeichnet, dass** als Edukt wässrige Dispersionen oder Lösungen von Ionenkomplexen Polythiophen⁺An⁻ verwendet werden, die ganz oder teilweise vom anorganischen Salzgehalt befreit wurden.

8. Verfahren nach den Ansprüchen 1 bis 7, **dadurch gekennzeichnet, dass** die Entfernung des Wassers in Schritt b) durch Destillation erfolgt.

9. Dispersionen oder Lösungen Ionenkomplexen Polythiophen⁺An⁻, wobei Polythiophen⁺An⁻ für Polymere steht, die wiederkehrende Einheiten der Formel (II) enthalten, in der die Thiophenringe wenigstens zum Teil eine positive Ladung tragen und in der 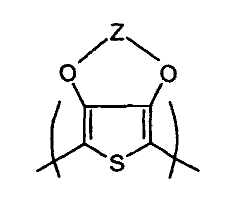
Z -(CH₂)ₘ-CR³R⁴(CH₂)ₙ-,
R³ Wasserstoff oder-(CH₂)ₛ-O-(CH₂)ₚ-SO₃⁻M⁺
R⁴ -(CH₂)ₛ-O-(CH₂)ₚ-SO₃⁻M⁺
m, n eine ganze Zahl von 0 bis 3
M⁺ ein Kation
s eine ganze Zahl von 0 bis 10
p eine ganze Zahl von 1 bis 18 bedeuten,
in wasserarmen oder wasserfreien organischen Lösungsmitteln.

10. Dispersionen oder Lösungen von Ionenkomplexen Polythiophen⁺An⁻nach Anspruch 9, **dadurch gekennzeichnet, dass** der anorganische Salzgehalt weniger als 40 % der Menge beträgt, die ursprünglich für die oxidative Polymerisation der Monomere eingesetzt wurde.

11. Dispersionen oder Lösungen von Ionenkomplexen Polythiophen⁺An⁻ nach den Ansprüchen 9 oder 10, **dadurch gekennzeichnet, dass** der Wassergehalt zwischen 0 und 5 Gew.-% beträgt.

12. Verfahren zur Leitfähigkeitsausrüstung von Substraten, **dadurch gekennzeichnet, dass** man Dispersionen oder Lösungen von Ionenkomplexen Polythiopen⁺An⁻ gemäß den Ansprüchen 9 bis 11 einsetzt.

13. Verfahren zur Antistatik-Ausrüstung von Substraten, **dadurch gekennzeichnet, dass** man Dispersionen oder Lösungen von Ionenkomplexen Polythiophen⁺An⁻ gemäß den Ansprüchen 9 bis 11 einsetzt.

14. Verfahren zur antistatischen Ausrüstung von fotographischem Material, **dadurch gekennzeichnet, dass** man Dispersionen oder Lösungen von Ionenkomplexen Polythiophen⁺An⁻ gemäß den Ansprüchen 9 bis 11 einsetzt.

15. Verfahren zur Herstellung von Feststoffelektrolyten in Feststoffkondensatoren, **dadurch gekennzeichnet, dass** man Dispersionen oder Lösungen von Ionenkomplexen Polythiophen⁺An⁻ gemäß den Ansprüchen 9 bis 11 einsetzt.

16. Verfahren zur Herstellung von elektrolumineszierenden Anordnungen, **dadurch gekennzeichnet, dass** man Dispersionen oder Lösungen von Ionenkomplexen Polythiophen⁺An⁻ gemäß den Ansprüchen 9 bis 11 einsetzt.

## Claims

1. Process for the preparation of dispersions or solutions comprising polythiophene⁺An⁻ ion complexes in organic solvents, **characterized in that**
a) a water-miscible organic solvent or a water-miscible organic solvent mixture is added to an aqueous dispersion or solution of polythiophene⁺An⁻ ion complexes, where polythiophene⁺ is a polymer which comprises recurring units of the formula (I) 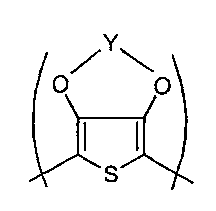 at least some of which are positively charged and
in which
Y is -(CH₂)ₘ-CR¹R²(CH₂)ₙ- or an optionally substituted 1,2-C₃-C₈-cycloalkylene radical, and
R¹ and R², independently of one another, are hydrogen, hydroxymethyl, an optionally substituted C₁-C₂₀-alkyl radical or an optionally substituted C₆-C₁₄-aryl radical,
and
m and n are identical or different and are an integer from 0 to 3,
and where
An⁻ is an anion of an organic polyacid,
or where
polythiophene⁺An⁻ is a polymer which comprises recurring units of the formula (II) 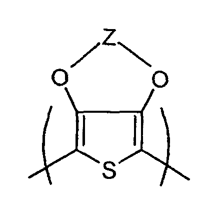 in which at least some of the thiophene rings carry a positive charge and
in which
Z is -(CH₂)ₘ-CR³R⁴(CH₂)ₙ-,
R³ is hydrogen or -(CH₂)ₛ-O-(CH₂)ₚ-SO₃⁻M⁺,
R⁴ is -(CH₂)ₛ-O-(CH₂)ₚ-SO₃⁻M⁺,
m and n are an integer from 0 to 3,
M⁺ is a cation,
s is an integer from 0 to 10, and
p is an integer from 1 to 18,
and
b) water is removed from the resultant mixtures.

2. Process according to Claim 1, **characterized in that** the resultant dispersion or solution is diluted with an organic solvent or a mixture of organic solvents subsequent to step b).

3. Process according to Claims 1 or 2, **characterized in that** the aqueous dispersions or solutions employed for step a) comprise polythiophene⁺An⁻ ion complexes where polythiophene⁺ is a polymer which comprises recurring units of the formula (I), at least some of which are positively charged and in which
Y is -(CH₂)ₘ-CR¹R²(CH₂)ₙ- or a 1,2-cyclohexylene radical, and
R¹ and R², independently of one another, are hydrogen, hydroxymethyl, C₁-C₈-alkyl or phenyl, and
m and n are identical or different and are 0 or 1,
and where
An⁻ is an anion of a polyacrylic acid, polyvinylsulphonic acid, polystyrene-sulphonic acid, a mixture thereof or a copolymer of the parent monomers or copolymers with acid-free monomers.

4. Process according to Claims 1 or 2, **characterized in that** the aqueous dispersions or solutions employed for step a) comprise polythiophene⁺An⁻ complexes where polythiophene⁺An⁻ is a polymer which comprises recurring units of the formula (II) in which at least some of the thiophene rings carry a positive charge and in which
Z is -(CH₂)ₘ-CR¹R²(CH₂)ₙ-,
R³ is hydrogen,
R⁴ is -(CH₂)ₛ-O-(CH₂)ₚ-SO₃⁻M⁺,
m and n are an integer from 0 to 3,
M⁺ is a cation,
s is 0, 1 or 2,
p is 4 or 5.

5. Process according to Claims 1 or 2, **characterized in that** the aqueous dispersions or solutions employed in step a) comprise polythiophene⁺An⁻ ion complexes where polythiophene⁺ is a polymer which comprises recurring units of the formula (I), at least some of which are positively charged and
in which
Y is a 1,2-ethylene radical,
and where
An⁻ is an anion of a polystyrenesulphonic acid.

6. Process according to Claims 1 or 2, **characterized in that** the aqueous dispersions or solutions employed for step a) comprise polythiophene⁺An⁻ complexes where polythiophene⁺An⁻ is a polymer which comprises recurring units of the formula (II) in which at least some of the thiophene rings carry a positive charge and in which
Z is -(CH₂)ₘ-CR³R⁴(CH₂)ₙ-,
R³ is hydrogen,
R⁴ is -(CH₂)ₛ-O-(CH₂)ₚ-SO₃⁻M⁺,
m is 1,
n is 0 or 1,
M⁺ is a cation,
s is 0 or 1,
p is 4.

7. Process according to Claims 1 to 6, **characterized in that** the starting material used is an aqueous dispersion or solution of a polythiophene⁺An⁻ ion complex which has been fully or partially freed from the inorganic salt content.

8. Process according to Claims 1 to 7, **characterized in that** the removal of water in step b) is carried out by distillation.

9. Dispersions or solutions of polythiophene⁺An⁻ ion complexes where polythiophene⁺An⁻ is a polymer which comprises recurring units of the formula (II) 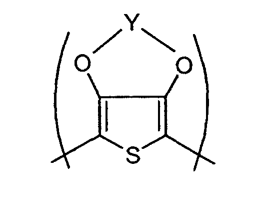 in which at least some of the thiophene rings carry a positive charge and in which
Z is -(CH₂)ₘ-CR³R⁴(CH₂)ₙ-,
R³ is hydrogen or-(CH₂)ₛ-O-(CH₂)ₚ-SO₃⁻M⁺,
R⁴ is -(CH₂)ₛ-O-(CH₂)ₚ-SO₃⁻M⁺,
m and n are an integer from 0 to 3,
M⁺ is a cation,
s is an integer from 0 to 10, and
p is an integer from 1 to 18,
in low-water-content or anhydrous organic solvents.

10. Dispersions or solutions of polythiophene⁺An⁻ ion complexes according to Claim 9, **characterized in that** the inorganic salt content is less than 40% of the amount originally employed for the oxidative polymerization of the monomers.

11. Dispersions or solutions of polythiophene⁺An⁻ ion complexes according to Claims 9 or 10, **characterized in that** the water content is from 0 to 5% by weight.

12. Process for providing substrates with conductivity, **characterized in that** dispersions or solutions of polythiophene⁺An⁻ ion complexes according to Claims 9 to 11 are employed.

13. Process for the antistatic finishing of substrates, **characterized in that** dispersions or solutions of polythiophene⁺An⁻ ion complexes according to Claims 9 to 11 are employed.

14. Process for the antistatic finishing of photographic material, **characterized in that** dispersions or solutions of polythiophene⁺An⁻ ion complexes according to Claims 9 to 11 are employed.

15. Process for the production of solid electrolytes in solid-state capacitors, **characterized in that** dispersions or solutions of polythiophene⁺An⁻ ion complexes according to Claims 9 to 11 are employed.

16. Process for the production of electroluminescent arrangements, **characterized in that** dispersions or solutions of polythiophene⁺An⁻ ion complexes according to Claims 9 to 11 are employed.

## Revendications

1. Procédé de préparation de dispersions ou de solutions contenant des complexes ioniques polythiophène⁺An⁻, dans des solvants organiques, **caractérisé en ce que**
a) un solvant organique miscible avec l'eau ou un mélange de solvants organiques miscible avec l'eau est ajouté à une dispersion ou à une solution aqueuse de complexes ioniques polythiophène⁺An⁻, polythiophène⁺ représentant des polymères qui contiennent des unités récurrentes, au moins en partie à charge positive, de la formule (I), 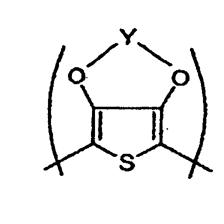 dans laquelle
Y correspond à -(CH₂)ₘ-CR¹R²(CH₂)ₙ- ou à un radical 1,2-cycloalkylène en C₃-C₈, substitué le cas échéant et
R¹ et R² représentent indépendamment l'un de l'autre l'hydrogène, un hydroxyméthyle, un radical alkyle en C₁-C_{20'} substitué le cas échéant ou un radical aryle en C₆-C₁₄, substitué le cas échéant,
et
m et n sont identiques ou différents et équivalent à un nombre entier de 0 à 3
et
An⁻ représentant un anion d'un polyacide organique,
ou
polythiophène⁺An⁻ représentant des polymères qui contiennent des unités récurrentes de la formule (II), dans laquelle les cycles thiophène portent, au moins en partie, une charge positive 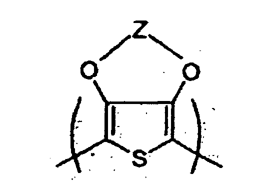 et dans laquelle
Z = -(CH₂)ₘ-CR³R⁴(CH₂)ₙ-,
R³ = l'hydrogène ou -(CH₂)ₛ-O-(CH₂)ₚ-SO₃⁻M⁺
R⁴ = -(CH₂)ₛ-O-(CH₂)ₚ-SO₃⁻M⁺
m, n = un nombre entier de 0 à 3
M⁺ = un cation
s = un nombre entier de 0 à 10
p = un nombre entier de 1 à 18
et
b) l'eau est éliminée des mélanges obtenus.

2. Procédé selon la revendication 1, **caractérisé en ce qu'**à la suite de l'étape b), la dispersion ou la solution obtenue est diluée avec un solvant organique ou un mélange de solvants organiques.

3. Procédé selon les revendications 1 ou 2, **caractérisé en ce que** les dispersions ou les solutions aqueuses mises en oeuvre pour l'étape a) contiennent des complexes ioniques polythiophène⁺An⁻, polythiophène⁺ représentant des polymères qui contiennent des unités récurrentes, au moins en partie à charge positive, de la formule (I), dans laquelle
Y correspond à -(CH₂)ₘ-CR¹R²(CH₂)ₙ- ou à un radical 1,2-cyclohexylène et
R¹ et R² représentent indépendamment l'un de l'autre l'hydrogène, un hydroxyméthyle, un alkyle en C₁-C₈ ou un phényle,
et
m et n sont identiques ou différents et équivalent à 0 ou 1
et
An⁻ représentant des anions d'acides polyacryliques, polyvinylsulfoniques, polystyrènesulfoniques, des mélanges de ceux-ci ou des copolymères des monomères sous-jacents ou des copolymères avec des monomères exempts d'acides.

4. Procédé selon les revendications 1 ou 2, **caractérisé en ce que** les dispersions ou les solutions aqueuses mises en oeuvre pour l'étape a) contiennent des complexes ioniques polythiophène⁺An⁻, polythiophène⁺An⁻ représentant des polymères qui contiennent des unités récurrentes de la formule (II), dans laquelle les cycles thiophène portent, au moins en partie, une charge positive et dans laquelle
Z = -(CH₂)ₘ-CR¹R²(CH₂)ₙ-,
R³ = l'hydrogène
R⁴ = -(CH₂)ₛ-O-(CH₂)ₚ-SO₃⁻M⁺
m, n = un nombre entier de 0 à 3
M⁺ = un cation
s = 0, 1 ou 2
p = 4 ou 5

5. Procédé selon les revendications 1 ou 2, **caractérisé en ce que** les dispersions ou les solutions aqueuses mises en oeuvre pour l'étape a) contiennent des complexes ioniques polythiophène⁺An⁻, polythiophène⁺ représentant des polymères qui contiennent des unités récurrentes, au moins en partie à charge positive, de la formule (I),
dans laquelle
Y correspond à un radical 1,2-éthylène,
An⁻ représentant des anions d'acides polystyrènesulfoniques.

6. Procédé selon les revendications 1 ou 2, **caractérisé en ce que** les dispersions ou les solutions aqueuses mises en oeuvre pour l'étape a) contiennent des complexes ioniques polythiophène⁺An⁻, polythiophène⁺An⁻ représentant des polymères qui contiennent des unités récurrentes de la formule (II), dans laquelle les cycles thiophène portent, au moins en partie, une charge positive et dans laquelle
Z = -(CH₂)ₘ-CR³R⁴(CH₂)ₙ-,
R³ = l'hydrogène
R⁴ = -(CH₂)ₛ-O-(CH₂)ₚ-SO₃⁻M⁺
m = 1
n = 0 ou 1
M⁺ = un cation
s = 0 ou 1
p = 4

7. Procédé selon les revendications 1 à 6, **caractérisé en ce que** l'on utilise comme éduit des dispersions ou des solutions aqueuses de complexes ioniques polythiophène⁺An⁻, qui ont été débarrassées en tout ou partie de leur teneur en sels inorganiques.

8. Procédé selon les revendications 1 à 7, **caractérisé en ce que** l'élimination de l'eau dans l'étape b) a lieu par distillation.

9. Dispersions ou solutions de complexes ioniques polythiophène⁺An⁻, polythiophène⁺An⁻ représentant des polymères qui contiennent des unités récurrentes de la formule (II), dans laquelle les cycles thiophène portent, au moins en partie, une charge positive et dans laquelle
Z = -(CH₂)ₘ-CR³R⁴(CH₂)ₙ-,
R³ = l'hydrogène ou -(CH₂)ₛ-O-(CH₂)ₚ-SO₃⁻M⁺
R⁴ = -(CH₂)ₛ-O-(CH₂)ₚ-SO₃⁻M⁺
m, n = un nombre entier de 0 à 3
M⁺ = un cation
s = un nombre entier de 0 à 10
p = un nombre entier de 1 à 18,
dans des solvants organiques pauvres en eau ou anhydres.

10. Dispersions ou solutions de complexes ioniques polythiophène⁺An⁻ selon la revendication 9, **caractérisées en ce que** la teneur en sels inorganiques est inférieure à 40 % de la proportion qui a été mise en oeuvre initialement pour la polymérisation par oxydation des monomères.

11. Dispersions ou solutions de complexes ioniques polythiophène⁺An⁻ selon les revendications 9 ou 10, **caractérisées en ce que** la teneur en eau est comprise entre 0 et 5 % en poids.

12. Procédé pour rendre des substrats conductibles, **caractérisé en ce que** l'on met en oeuvre des dispersions ou des solutions de complexes ioniques polythiophène⁺An⁻ selon les revendications 9 à 11.

13. Procédé pour rendre des substrats antistatiques, **caractérisé en ce que** l'on met en oeuvre des dispersions ou des solutions de complexes ioniques polythiophène⁺An⁻ selon les revendications 9 à 11.

14. Procédé pour rendre du matériel photographique antistatique, **caractérisé en ce que** l'on met en oeuvre des dispersions ou des solutions de complexes ioniques polythiophène⁺An⁻ selon les revendications 9 à 11.

15. Procédé de production d'électrolytes solides dans des condensateurs solides, **caractérisé en ce que** l'on met en oeuvre des dispersions ou des solutions de complexes ioniques polythiophène⁺An⁻ selon les revendications 9 à 11.

16. Procédé de production d'affichages électroluminescents, **caractérisé en ce que** l'on met en oeuvre des dispersions ou des solutions de complexes ioniques polythiophène⁺An⁻ selon les revendications 9 à 11.
